# EUROPEAN PATENT APPLICATION

(11) **EP 2 757 568 A1**
(43) Date of publication of application: **23.07.2014**
(21) Application number: 14151791.2
(22) Date of filing: 20.01.2014
(51) Int. Cl.: H01H 23/24

(54) **A low energy environmental sensor that receives inputs via movement thereof, and a method of operating a rocking environmental sensor**

(30) Priority: 21.01.2013 US 201361754920 P; 23.01.2013 US 201361755890 P; 28.06.2013 US 201313931175
(71) Applicant: Lennox Industries Inc., Richardson, TX 75080 (US)
(72) Inventor: Difulgentiz III, Robert Anthony, Richardson, TX Texas 75080 (US); Bias, Larry S., Richardson, TX Texas 75080 (US); Pavlak, Thomas Gerard, Commerce Township, MI Michigan 48382 (US); Golden, Kyle, Richardson, TX Texas 75080 (US); Sakai, Takeshi, Carrollton, TX Texas 75006 (US); Castillo, Daniel, Carrollton, TX Texas 75006 (US)
(74) Representative: Williams, David John

(57) **Abstract**

A low energy environmental sensor is provided herein that is configured to receive user inputs from movement of the sensor itself. A method of operating a rocking environmental sensor is also provided. The rocking environmental sensor includes a base 210 having a fulcrum point 216 and a face 220 including a first 262 and a second 264 movement initiator area configured to cause the face to toggle with respect to the fulcrum point and complete a signaling path indicating a user input.

## Description

### CROSS REFERENCE TO RELATED APPLICATION

This application claims the benefit of U.S. Provisional Application Serial No. 61/755,890, filed by Robert Anthony DiFulgentiz III, et al., on January 23, 2013, entitled "AESTHETICALLY PLEASING TEMPERATURE SENSOR WITH ROCKING DESIGN," and U.S. Provisional Application Serial No. 61/754,920, filed by Takeshi Sakai, et al., on January 21, 2013, and entitled "LOW PROFILE, LOW ENERGY TEMPERATURE SENSOR WITH COMMUNICATING CAPABILITY," both of which are currently pending and incorporated herein by reference.

### TECHNICAL FIELD

This application is directed, in general, to HVAC systems and, more specifically, to an environmental sensor for use with an HVAC system.

### BACKGROUND

HVAC systems are prevalent in enclosures/structures such as homes, offices, etc. Typically, there is indoor equipment and outdoor equipment with each HVAC system. This includes control equipment and user interface equipment. Improvements in energy consumption for any of the HVAC equipment would be beneficial. Additionally, improvements in the appearance of any HVAC equipment would also be beneficial.

### SUMMARY

In one aspect, a rocking environmental sensor is disclosed. In one embodiment, the rocking environmental sensor includes: (1) a base having a fulcrum point and (2) a face including a first movement initiator area and a second movement initiator area configured to cause the face to toggle with respect to the fulcrum point and complete a signaling path indicating a user input.

In another aspect, an environmental sensor for use with a HVAC system is disclosed. In one embodiment, the environmental sensor includes: (1) a processor configured to direct operation of the sensor based on a user input and (2) a rocking input system having (2A) a first component having a fulcrum point and (2B) a second component including a first movement initiator area and a second movement initiator area configured to cause the second component to toggle with respect to the fulcrum point and complete a signaling path indicating the user input.

In yet another aspect, a method of operating an environmental sensor employable in a HVAC system is disclosed. In one embodiment, the method includes: (1) receiving a user input via movement of the environmental sensor, (2) generating a control signal in response to the user input and (3) performing a function in response to the control signal.

### BRIEF DESCRIPTION

Reference is now made to the following descriptions taken in conjunction with the accompanying drawings, in which:
FIG. 1 illustrates a high-level block diagram of an embodiment of a HVAC system constructed according to the principles of the disclosure;
FIG. 2 illustrates a diagram of an embodiment of a remote indoor sensor for an HVAC system constructed according to the principles of the disclosure; and
[0001] FIG. 3 illustrates another diagram of an embodiment of remote indoor sensor constructed according to the principles of the disclosure.

### DETAILED DESCRIPTION

This disclosure provides an environmental sensor with a rocking design that allows a user to interface therewith. The center of the sensor acts as a fulcrum allowing the top and bottom parts thereof to rock back and forth. The rocking motion acts as an input, such as a button press. As such, the sensor can employ the rocking motion input to effect changes to corresponding settings associated with the sensor. The sensor itself, therefore, is a rocking switch wherein a user can change settings on the sensor by pressing on the top and the bottom of the sensor. Alternatively, the user could pull on the top or the bottom of the sensor to activate the rocking switch and change the settings of the sensor. One skilled in the art will understand that the sensor can also employ a horizontal rocking motion, i.e., left to right or right to left, as input instead of a vertical rocking motion, i.e., top to bottom or bottom to top. Accordingly, the discussions herein regarding a sensor with a vertical rocking motion also apply to a sensor with a horizontal rocking motion. The axis of rocking or toggling can be automatically determined by the sensor when the sensor is installed. A conventional orientation sensor including, for example, an accelerometer and a magnometer can be used to determine the orientation. A processor of the sensor can employ the orientation sensor to determine orientation to display data at the proper orientation for viewing.

One advantage of the sensor having a rocking design is the elimination or reduction of buttons. As such, capacitive, mechanical, physical or other types of buttons are not required to receive user input. Instead, a user can press on the top or bottom of the sensor to adjust settings.

In one embodiment the sensor is a remote indoor sensor (RIS) that provides a user interface for controlling the operation of an HVAC system. The sensor can be a wireless or wired sensor that communicates with the HVAC system via conventional communications mediums. In some embodiments, the sensor is configured to interact with a controller of a HVAC system to control operation thereof or provide data, such as environmental data that can be used for control. In one embodiment, the sensor is configured to perform traditional functions such as measure temperature and control/direct operation of the HVAC system. For example, the sensor can include the functionality of a Comfort Sensor available from Lennox Industries Inc. of Richardson, Texas. The sensor can be a temperature sensor with optional relative humidity and/or carbon dioxide sensing capabilities that controls zone damper or variable volume terminal box in zoning applications to maintain space temperature and indoor environmental quality.

The sensor includes a display and processor configured to direct the operation thereof. In one embodiment, the processor of the sensor can be a microprocessor on a printed circuit board (PCB). The sensor can be used by a user after installation and by a manufacturer during testing of the sensor or of systems associated with the sensor. The processor is configured to receive inputs via the rocking or toggling of the sensor and generate control signals in response thereof to direct operation of the sensor or of a system connected to the sensor. The input data can be used to increase or decrease a particular setting displayed by the sensor. In other embodiments, the input data can correspond to a predetermined input sequence to direct operation of the sensor. For example, the processor of the sensor can interpret a series of inputs caused by toggling of the sensor within a designated time, e.g., half a second, to perform various functions. The functions could include, for example, displaying particular data on a display of the sensor.

The rocking design of the disclosed environmental sensor can contribute to an aesthetically pleasing look of the sensor. Thus, in contrast to conventional sensors, the sensor disclosed herein has a sleek design with a thin cross-section that allows the sensor to "disappear" into a wall after installation. As such, in some embodiments an aesthetically pleasing sensor is disclosed that also includes an improved interface.

In some embodiments, the display of the sensor is a low energy display. Thus, in contrast to conventional sensors that use backlight display technologies, such as liquid crystal displays and light emitting diodes, the disclosed sensor consumes less energy. In one embodiment, the display is an electronic ink display. In addition to lower power consumption, an electronic ink display can provide a display that is easier to read with wider viewing angles than a conventional sensor display. With the advent of wireless communication, the low energy display is advantageous in preserving the life of a battery power supply. In one embodiment, the disclosed sensor is designed to meet ENERGY STAR requirements for residential thermostats.

Reference is now made to the following figures that include additional descriptions of the sensors disclosed herein and the systems in which they can be employed.

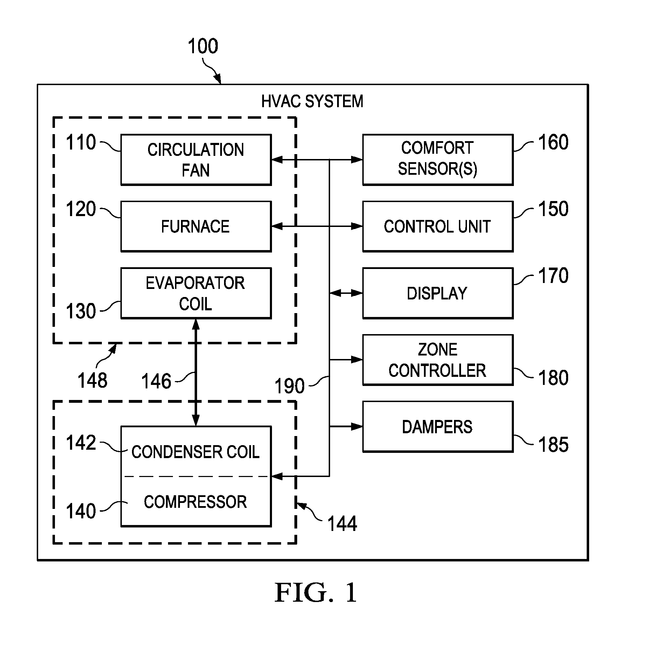

FIG. 1 is a high-level block diagram of an embodiment of a HVAC system 100, constructed according to the principles of the disclosure. The HVAC system 100 is a networked HVAC system configured to condition air within an enclosed space, such as a house, an office building, a warehouse, etc. The HVAC system 100 includes multiple components with a single one of some of the components in FIG. 1 being represented. One skilled in the art will understand that multiple of the same components can be included. One skilled in the art will also understand the HVAC system 100 can include other components that are not illustrated but typically included with an HVAC system.

The HVAC system 100 is a zoned system. As such, multiple comfort sensors 160 and dampers 185 are denoted. The HVAC system 100 also includes a circulation fan 110, a furnace 120, typically associated with the circulation fan 110, and a refrigerant evaporator coil 130, also typically associated with the circulation fan 110. The circulation fan 110, furnace 120, and refrigerant evaporator coil 130 are collectively referred to as the "indoor unit." This embodiment of the system 100 also includes a compressor 140 and an associated condenser coil 142, which are typically referred to as the "outdoor unit" 144. The compressor 140 and associated condenser coil 142 are typically connected to an associated evaporator coil 130 by a refrigerant line 146.

The circulation fan 110, sometimes referred to as a blower, can operate at different capacities, i.e., motor speeds, to circulate air through the HVAC system 100, whereby the circulated air is conditioned and supplied to the conditioned enclosed space. The circulation fan 110 moves the air at a certain capacity according to a blower volume. The blower volumes for a circulating fan can be stored in an indoor controller of a HVAC system, such as control unit 150. The blower volume is the airflow capacity or rate (often expressed in terms of cubic feet per minute, or CFM) of the circulating fan 110.

The control unit 150 is configured to control the circulation fan 110, the furnace 120 and/or the compressor 140 to regulate the temperature of the enclosed space, at least approximately. The control unit 150 may be an integrated controller or a distributed controller that directs operation of the HVAC system 100. The control unit 150 may include an interface to receive thermostat calls, blower control signals, and blower volumes for various zones and operating modes of the HVAC system. The control unit 150 also includes a processor, such as a microprocessor, to direct the operation of the HVAC system 100. The processor can be configured to direct operation of the circulation fan 110 per blower volumes entered during installation of the HVAC system 100. The control unit 150 may include a memory section having a series of operating instructions stored therein that direct the operation of the control unit 150 (e.g., the processor) when initiated thereby.

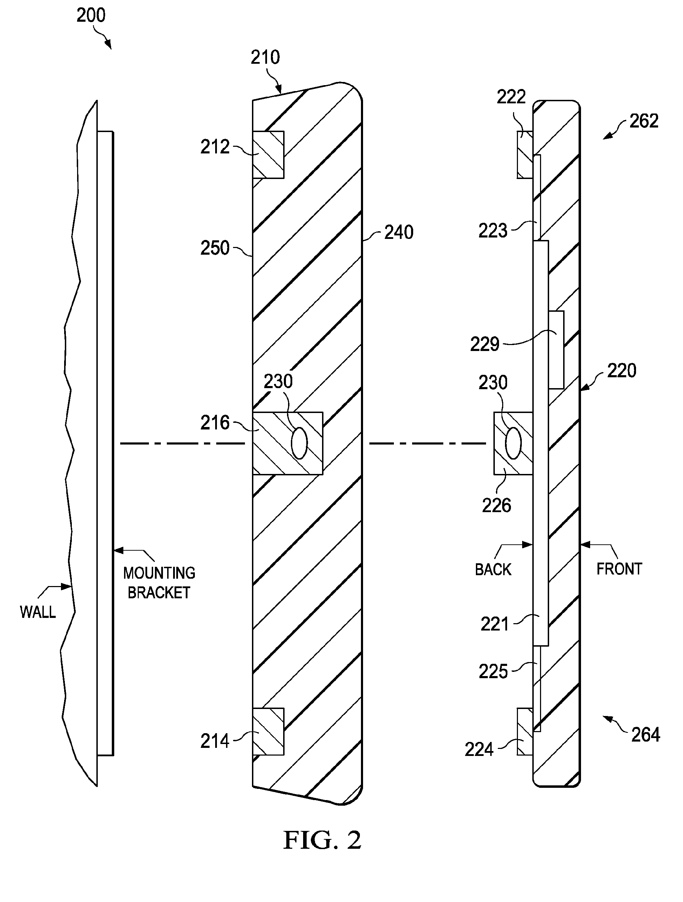

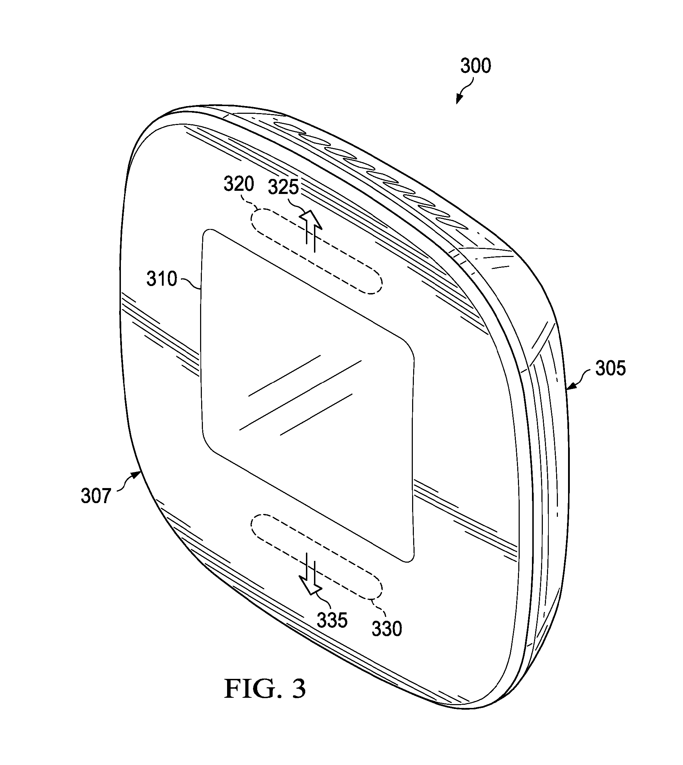

The HVAC system 100 also includes comfort sensors 160 that may be associated with the control unit 150 and also optionally associated with a display 170. The comfort sensors 160 provide current information, environmental data, about environmental conditions within zones of the enclosed space, such as temperature, humidity and air quality to the control unit 150 and display 170. At least one of the comfort sensors 160 is a remote indoor sensor as disclosed herein with the rocking feature. More details of the remote indoor sensor are provided with respect to FIG. 2 and FIG. 3.

In various embodiments, the display 170 provides additional functions such as operational, diagnostic and status message display and an attractive, visual interface that allows an installer, user or repairman to perform actions with respect to the HVAC system 100 more intuitively. In some embodiments, the display 170 is a thermostat for the HVAC system 100. In other embodiments, the display 170 is associated with a controller of the HVAC system 100, such as the control unit 150. Herein, the term "user" will be used to refer collectively to any of an operator, an installer, a user, a tester, a manufacturer, a repairman, etc., unless clarity is served by greater specificity.

The zone controller 180 is configured to manage the movement of conditioned air to the designated zones of the enclosed space. Each of the designated zones include at least one demand unit, such as the furnace 120, and at least one user interface, such as a thermostat. The zone controlled HVAC system 100 allows a user to independently control the temperature in the designated zones. The zone controller 180 operates electronic dampers 185 to control air flow to the zones of the enclosed space. The zone controller 180 generates a blower control signal to request a blower volume for the circulation fan 110. In some embodiments, the zone controller 180 is configured to provide greater air flow for one zone than another zone to compensate for greater demands or air flow requirements. The zone controller 180 can be a conventional controller for delivering conditioned air to designated zones of a conditioned space. Harmony III™ Zone Control System available from Lennox Industries Inc. of Richardson, Texas, is an example of a zoning system that employs a zone controller to manage the distribution of conditioned air to designated zones.

The blower control signal is typically an electrical signal generated by a zoning control panel in response to thermostat demands from different zones. The blower control signal can be an analog or a digital signal. Considering the Harmony III™ Zone Control System, a pulse width modulated (PWM) signal is used for a blower control signal and a change in the duty cycle of the PWM signal indicates a change in the operating speed of the circulation fan. In other embodiments, the blower control signal can be a data signal including a messaging protocol signal, such as a controller area network (CAN) signal, or an output of a transducer. The blower control signal can reflect the blower volumes input by an installer employing a user interface.

A data bus 190, which in the illustrated embodiment is a serial bus, couples the various components of the HVAC system 100 together such that data may be communicated therebetween or thereamong. As will be understood, the data bus 190 may be advantageously employed to convey one or more alarm messages or one or more diagnostic messages. In some embodiments, the connections therebetween are through a wired-connection. A conventional cable and contacts may be used to couple the control unit 150 to the various components. In some embodiments, a wireless connection may also be employed to provide at least some of the connections.

FIG. 2 illustrates a diagram of an embodiment of a rocking sensor 200 constructed according to the principles of the disclosure. The rocking sensor 200 includes a base 210 and a face 220. The base 210 includes a first directional contact 212 and a second directional contact 214. In one embodiment, the first and second directional contacts 212, 214, correspond to an up contact and a down contact, respectively. In other embodiments, the first and second directional contacts 212, 214, can correspond to a left contact and a right contact. Thus, the first and second directional contacts 212, 214, can correspond to a vertical and/or horizontal rocking motion for user input. The particular rocking motion orientation can depend on how the rocking sensor 200 is installed. The base 210 also includes a fulcrum point 216.

One skilled in the art will understand that the rocking sensor 200 also includes other components that are not illustrated but are typically included within an environmental sensor. For example, the rocking sensor 200 can include additional components that are typically included within a comfort sensor such as the functionality of a Comfort Sensor available from Lennox Industries Inc. of Richardson, Texas.

One such component is a PCB that can include a processor. In the illustrated embodiment, the sensor 200 includes a PCB 221 that includes a processor 229. In FIG. 2, the PCB 221 is within or is part of the face 220 of the rocking sensor 200, such as the back of the face 220. In another embodiment, the PCB 221 could be attached to the base 210 and the directional contacts 212, 214, could be included thereon.
A back of the face 220 includes an increase contact 222, a decrease contact 224 and a fulcrum connector 226. In one embodiment, the back of the face 220 is or includes a side of the PCB 221. The increase contact 222 and the decrease contact 224 correspond to the first directional contact 212 and the second directional contact 214, respectively, and provide a signal path that can be used, for example, to decrease or increase settings of the rocking sensor 200. The first and second directional contacts 212, 214, are connected via conventional means to the PCB 121 by connectors 223 and 225. Conventional traces on the PCB 221 can be used to deliver the signals to the processor 229. The processor 229 is configured to receive the input from the signal path and process accordingly. For example, the processor 229 can be configured to generate control signals in response to the received input from the signal paths. As such, the processor 229 can receive a user input via rocking of the sensor 200, generate a control signal in response to the user input and perform a function in response to the control signal. The function can be a function typically performed by, for example, a Comfort Sensor from Lennox Industries Inc. The corresponding pairs of contacts of the sensor 200 are connected when, for example, a user applies sufficient pressure to a first movement initiator area 262 or a second movement initiator area 264 of the face 220.

The first and second movement initiator areas 262, 264, are portions of the face 220 that cause movement of the face 220 when pressure is applied thereto. Unlike conventional sensors that rely on buttons to receive an input, the first and second movement initiator areas 262, 264, can be constructed of the same material as the base 216 of the sensor 200. As such, the sensor 200 can receive user input without requiring designated buttons or using a touchscreen technology. The construction cost of the sensor 200, therefore, or at least of the face 220, can be less compared to conventional sensors.

Applied pressure to either the first or second movement initiator areas 262, 264, can cause movement of the face 220 to generate an input, such as an increase or a decrease input, to the rocking sensor 200. In some embodiments, the movement can be used to generate a different input than just an increase or decrease signal. The applied pressure to the first movement initiator area 262 or the second movement initiator area 264 cause the face 220 to toggle with respect to a fulcrum provided when the fulcrum point 216 and the fulcrum connector 226 interface. In one embodiment, the fulcrum point 216 and the fulcrum connector 226 include a through-hole 230 upon which a pin (not shown) can be inserted to connect the two to form the fulcrum. In one embodiment, the face 220 fits within the base 210 and "toggles" within the volume defined by the base 210. In such an embodiment the face 220 is flush with an open side 240 of the base 210 (i.e., the opposite side of a mounting side 250 of the rocking sensor). As such, the top or bottom are pushed to create contact between the first or second directional contacts 212, 214, and the respective increase or decrease contact 222, 224. In other embodiments, the face 220 is not flush with the open side 240 to allow the top or bottom of the face 220 to be pulled to initiate contact at the opposite end of the rocking sensor 200.

The sensor 200 includes the necessary wiring and/or connections, such as connections 223, 225, to complete signaling paths when one of the pair of corresponding contacts, e.g., the first directional contact 212 and the increase contact 222, are connected. Each of the noted contacts is a material that conducts electricity, such as a metal. In one embodiment, the noted contacts are a metal such as copper. In one embodiment, the first directional contact 212 and the second directional contact 214 are grounds.

The signaling paths for increasing or decreasing a setting of the sensor 200 are connected to the processor 229 of the sensor 200. The processor 229 can be a microprocessor on the PCB. The noted contacts and the fulcrum components can be manufactured via conventional means.

FIG. 3 illustrates a diagram of a view of an embodiment of a rocking sensor 300 constructed according to the principles of the disclosure. The rocking sensor 300 illustrates an aesthetically pleasing and sleek design that can be employed with the rocking design disclosed herein. The rocking sensor 300 includes a base 305 and a face 307. In one embodiment, the base 305 and the face 307 correspond to the base 210 and the face 220 of the rocking sensor 200 in FIG. 2. As such, the base 305 includes a mounting side configured to receive a mounting bracket for fixing the rocking sensor 300 to a fixed location, e.g., a wall. The base 305 also includes an open side to receive the face 307. The base 305 and the face 307 (i.e., not including an area for a display) can be constructed of a plastic material typically employed for thermostats, sensors, controllers, etc. The base 305 is configured to connect to a bracket for connecting the sensor 300 to a fixed location, such as a wall. The bracket can be a conventional bracket. The components of sensor 300 are internal when mounted or when the base 305 and the face 307 are connected together for mounting. The internal components include the contacts, PCB and the fulcrum parts as illustrated in FIG. 2.

The face 307 includes a display 310, a first movement initiator area 320 and a second movement initiator area 330. The display 310 is configured to provide a visual indication of an environmental condition and the result of a user input. In one embodiment, the display 310 is a low energy display. In one such low energy embodiment, the display is an electronic ink display. Accordingly, the rocking sensor 300 can advantageously be employed for wireless applications where the rocking sensor 300 operates from a battery and communicates wirelessly with a master thermostat or control unit. With an electronic ink display, the rocking sensor 300 can continue to display the last value even after power has been removed. This allows the electronic ink display to be powered-up periodically or whenever any display changes are needed. This greatly reduces the amount of power required to operate the rocking sensor 300.

Additionally, an electronic ink display does not require a back-light but instead operates by reflecting the surrounding light to create a "natural" appearance to the elements of the display 310. In some embodiments, a front light can be used with an electronic ink display for readability in the dark. An electronic ink display also can be viewed at wider angles than other display technologies which is advantageous when manufacturing a sensor that has a reduced size to minimize interference with a homeowner's décor.

As noted above with respect to FIG. 2, the first movement initiator area 320 and the second movement initiator area 330 are used to cause movement of the face 307 to create a signal path. In some embodiments, the face includes a design, such as arrows, to indicate the location of the first movement initiator area 320 and the second movement initiator area 330. In FIG. 3, the design is represented by arrows 325 and 335. The arrows 325, 335, indicate an input direction to cause a particular result, such as an increase (arrow 325) and a decrease (arrow 335).

Those skilled in the art to which this application relates will appreciate that other and further additions, deletions, substitutions and modifications may be made to the described embodiments.

## Claims

1. A rocking environmental sensor, comprising:
a base having a fulcrum point; and
a face including a first movement initiator area and a second movement initiator area configured to cause said face to toggle with respect to said fulcrum point and complete a signaling path indicating a user input.

2. The rocking sensor as recited in Claim 1 wherein said base includes first and second directional contacts, wherein either one of said first or second directional contact is used as part of said signaling path.

3. The rocking sensor as recited in Claim 1 wherein said face includes an increase contact and a decrease contact that are positioned to complete said signaling path depending on a direction of said toggle.

4. The rocking sensor as recited in Claim 1 wherein said face further includes a first design and a second design that indicates directions of said toggle.

5. The rocking sensor as recited in Claim 1 wherein said face further includes an electronic ink display.

6. The rocking sensor as recited in Claim 1 wherein said face does not include a button or touchscreen configured to receive a user input.

7. The rocking sensor as recited in Claim 1 further comprising a processor configured to direct operation of said rocking sensor based on said user input received via said toggle and generate a control signal to increase or decrease a setting of a HVAC system.

8. The rocking sensor as recited in Claim 7 wherein said processor is configured to interpret a series of inputs received via said signaling path to perform a predetermined function.

9. An environmental sensor for use with a heating, ventilating and air conditioning system, comprising:
a processor configured to direct operation of said sensor based on a user input; and
a rocking input system, including:
a first component having a fulcrum point; and
a second component including a first movement initiator area and a second movement initiator area configured to cause said second component to toggle with respect to said fulcrum point and complete a signaling path indicating said user input.

10. A method of operating an environmental sensor employable in a heating, ventilating and air conditioning (HVAC) system, comprising:
receiving a user input via movement of said environmental sensor;
generating a control signal in response to said user input; and
performing a function in response to said control signal.
